Europäisches Patentamt

European Patent Office

Office européen des brevets

(19)

(11) **EP 1 418 676 A1**

(12) **EUROPEAN PATENT APPLICATION**

(43) Date of publication:
**12.05.2004 Bulletin 2004/20**

(51) Int Cl.⁷: **H04B 1/10**, H04L 27/38

(21) Application number: **02360305.3**

(22) Date of filing: **07.11.2002**

(84) Designated Contracting States:
**AT BE BG CH CY CZ DE DK EE ES FI FR GB GR IE IT LI LU MC NL PT SE SK TR**
Designated Extension States:
**AL LT LV MK RO SI**

(71) Applicant: **ALCATEL**
**75008 Paris (FR)**

(72) Inventors:
• **Halbauer, Hardy, Dipl.-Ing.**
**76275 Ettlingen (DE)**

• **Oberle, Karsten, Dipl.-Ing, (FH)**
**68199 Mannheim (DE)**
• **Otterbach, Jürgen, Dipl.-Ing.**
**70499 Stuttgart (DE)**
• **Tomsu, Marco, Dipl.-Ing.**
**71254 Ditzingen (DE)**

(74) Representative: **Zinsinger, Norbert**
**Merianstrasse 26**
**90409 Nürnberg (DE)**

(54) **Receiver and transceiver for bursty signals**

(57)    The present invention concerns a method for gain control of a receiver (6) working with bursty signals (61) that may be modulated in more than one mode and wherein signal levels may vary in a high dynamic range as well as in a fast way, a receiver (6) and a transceiver comprising such a receiver. The receiver (6) comprises a first amplifier stage (81) situated near to the receiver input, the gain of this amplifier stage (81) is variable in a high dynamic range. The receiver (6) further compris-
es a second amplifier stage (84) situated near to a decision device (85), the gain of this amplifier stage (84) is variable in a fast way. From the quality of the decisions of the decision device (44) a criterion is derived for the necessary variation of the gains. From that criterion a fast, but dynamically limited part is derived and used for controlling the gain of the second amplifier stage (84). From said criterion a part including the full dynamic range, but limited in speed, is derived and used for controlling the gain of the first amplifier stage (81).

Fig. 4

EP 1 418 676 A1

**Description**

The present invention relates to a receiver for a transmission system working with bursty signals that may be modulated in more than one mode, and wherein the receiver comprises a decision device for symbol demapping. Further, the present invention relates to a transceiver comprising such a receiver. Further, the present invention relates to a method for gain control of a receiver working with bursty signals that may be modulated in more than one mode.

Fixed wireless radio systems use adaptive multi-mode modulation, such as for example next generation LMDS systems according to ETSI BRAN Hiperaccess or IEEE802.16 standard (LMDS = Local Multipoint Distribution Service).

Following coding and modulation steps are performed by such a transmission system:
To maximize utilization of air-link, the physical layer uses a multi-mode modulation scheme. The modulation constellation can be selected per subscriber based on the quality of the radio frequency channel. If link conditions permit, then a more complex modulation scheme can be utilized to maximizing air-link throughput while still allowing reliable data transfer. If the air-link degrades over time, possibly due to environmental factors, the system can revert to the less complex constellations to allow more reliable data transfer.

For example, QPSK, 16-QAM and 64-QAM modulation is supported. The sequence of modulation bits is mapped onto a sequence of modulation symbols S(k), where k is the corresponding symbol number. The number of bits per symbol depends on the modulation type. For QPSK, n = 2; for 16-QAM, n = 4; and for 64-QAM, n = 6. B(m) denotes the modulation bits of a sequence to be transmitted, where m is the bit number and m ranges from 1 through n. In particular, B(1) corresponds to the first bit entering the modulator, B(2) corresponds to the second bit entering the modulation, and so on.

The complex modulation symbol S(k) takes the value I + j Q. A mapping scheme defined between the values I, Q on the one side and B(1) to B(n) on the other side links the modulation symbol S(k) with the associated digital information. For demodulation, the mapping scheme is used to demap the modulation symbols back to the associated information.

The above mentioned modulation step is applied at the base band part of the modulator. Prior to modulation, the I and Q signals are filtered by square-root raised cosine filters.

The transmitted waveform at the antenna port S(t) shall be:
S(t) = I(t) cos($2\pi f_c$t) - Q(t) sin($2\pi f_c$t), where I(t) and Q(t) are the filtered base band pulse-shaped signals of modulation symbols F(k) and $f_c$ is the carrier frequency.

In changing from one burst profile to another, one of the two following power adjustment rules can be used: Maintaining constant constellation peak power or maintaining constant constellation mean power. In the constant peak power scheme, corner points are transmitted at equal power levels regardless of modulation type. In the constant mean power scheme, the signal is transmitted at equal mean power levels regardless of modulation type.

At the end of each burst, the final FEC encoded message might not end exactly on a frame boundary (FEC = Forward Error Correction). If this is the case, the end of the encoded message to the start of the next burst can be filled with zero bits.

A receiver receiving such kind of signal via a radio frequency channel has to perform following steps: burst demodulation, symbol demapping, FEC-decoding and de-randomization.

It is the object of the present invention to improve receivers applied for demodulation of bursty signals.

The object of the present invention is achieved by a receiver for a transmission system working with bursty signals that may be modulated in more than one mode, the receiver comprises a decision device for symbol demapping; a first amplifier stage situated near to the input of the receiver, the gain of the first amplifier stage is variable in a high dynamic range; a second amplifier stage situated near to the decision device, the gain is variable in a fast way; and a gain control device using the quality of the demodulation decision detected by the decision device as criterion for controlling the gains of the second amplifier stage and the first amplifier stage. The object of the present invention is further achieved by a transceiver comprising such kind of receiver. The object of the present invention is further achieved by a method for gain control of a receiver working with bursty signals that may be modulated in more than one mode, the method comprises the steps of controlling a first amplifier stage situated near to a receiver input, the gain of this amplifier stage is variable in a high dynamic range; controlling a second amplifier stage situated near to a decision device, the gain of this amplifier stage is variable in a fast way, or controlling the decision thresholds of a decision device mainly working in a digital way, the thresholds are variable in a fast way; deriving from the quality of the decisions of the decision device a criterion for the necessary variation of the gains or the decision thresholds, respectively; deriving from said criterion a fast, but dynamically limited part and using this part for controlling the gain of the second amplifier stage or the decision thresholds of the decision device, respectively; and deriving from said criterion a part including the full dynamic range, but limited in speed, and using this part for controlling the gain of the first amplifier stage.

The invention is not limited to multi-mode modulation signals, but is suitable for all types of bursty signals. In particular, it is suitable for all types of higher order (for example 16QAM, 64QAM) modulated burst signals. Further, it is possible that the signal levels may vary in a high dynamic range as well as in a fast way.

The present invention enables to adjust the gain applied to received burst signals fast, accurate and within a high dynamic range. Thereby, the quality of the demodulation decisions taken by the decision device is seriously improved.

Serious improvements are achieved for demodulation of multi-mode signals: The average power of a multi-mode signal varies within a transmission frame, depending on the currently assigned modulation format and frame structure. Therefore, the detection of the average power can not be used for gain setting of a receiver. Further, the adjustment has to be done with high accuracy to enable a proper decision process in the decision device.

Different average or peak power levels of different modulation formats normally influence the gain setting of a receiver. Standard power detection and control leads to bad results, because the multi-mode signal format has varying average power within a transmission frame, depending on the currently assigned modulation format and frame structure. Standard power detection is not able to detect the average power changes within a frame sufficiently fast and accurate.

Further advantages are achieved, if the invention is applied to a receiver or a transceiver for a radio channel. The required gain dynamic due to the radio channel is high (for example > 30dB, slope 20 dB/s). The adjustment has to be done smoothly with short time (for example less than 1 ms) and with high accuracy.

These requirements are perfectly fulfilled by help of the above described inventive concept, in contrast to normal gain control circuits. This makes it possible to build up receivers and transceivers of improved quality.

Further advantages are achieved by the embodiments indicated by the dependent claims.

According to a preferred embodiment of the invention, the first amplifier stage mainly works in an analog way and the second amplifier stage mainly works in a digital way. This provides an efficient implementation of an amplifier variable in a high dynamic range (but slow adjustment) and an amplifier variable in a fast way (but small dynamic range), respectively.

The quality of gain control is improved by the implementation of following concept: The gain control device executes a first gain control loop algorithm taking the quality of the demodulation decision as input value and controlling the gain of the second amplifier stage to force maximum quality of demodulation decisions and the gain control device executing a second gain control loop algorithm taking the gain of the second amplifier stage as input value and controlling the gain of the first amplifier stage to force the gain of the second amplifier stage to a predefined range.

According to this concept, the second algorithm is triggered by the first algorithm, which reduces the complexity of the whole gain control device. But, it is also possible to have one global algorithm which controls both, the first and the second amplifier stage.

According to a preferred embodiment of the invention, the second amplifier stage is a digital equalizer. This equalizer is used to improve the demodulation decision of the decision device by a proper equalization of the received signal.

Further, the receiver preferably comprises a digital demodulator for demodulating the carrier frequency and for determining the symbol clock and the symbol phase.

An efficient and accurate demapping of the symbols is achieved by using an adaptation algorithm, for example a zero forcing or LMS algorithm (LMS = Least Mean Square) as first gain control loop algorithm. The decision device generates an error signal indicating the quality of the demodulation decision and representing the mean symbol derivation. The adaptation algorithm takes the error signals as input value and controls the equalization coefficients of the second amplifier stage to force the error norm to a minimum value.

Further advantages are achieved by using a digital equalizer as second amplifier and determining the input value of the second gain control algorithm as described in the following:

The gain control device calculates the gain of the second amplifier stage based on the equalization coefficients of the digital equalizer. This calculated gain is used as input value of the second gain control algorithm.

As already noted above, several advantages are achieved by applying the invention to multi-mode modulation signals. Consequently, the decision device might be a multi-mode decision device performing a symbol demapping for different modulation formats, for example for QPSK, 16QAM and 64QAM, combined in multi-mode modulation frames. The decision device evaluates the headers of the multi-mode modulation frames for determining the modulation formats assigned to different parts of the multi-mode modulation frames. Then, it applies an associated symbol demapping algorithm to the different modulation formats of the multi-mode modulation frames. This is done by help of the results of this evaluation.

To increase the accuracy of the demodulation decision, the decision device may apply a respective associated predefined gain to the different modulation formats of the multi-mode modulation frames. Further, it is also possible to apply a dynamic mode-dependent adaptation: The second amplifier stage may apply a respective associated gain to different modulation formats of the multi-mode modulation frames, wherein the associated mode-dependent gains are controlled by the first gain control loop algorithm.

This as well as other features and advantages of the invention will be better appreciated by reading the following detailed description of presently preferred exemplary embodiments taken in conjunction with accompanying drawings of which:

Fig. 1    is a diagram which shows a multi-mode modulation frame.

Fig. 2    is a block-diagram showing a transceiver according to the invention.

Fig. 3    is a block-diagram showing the detailed structure of a receiver according to a first embodiment of the invention.

Fig. 4    is a block diagram showing the detailed structure of a receiver according to a second embodiment of the invention.

A multi-mode modulated signal consists of frames, which contain different modulation formats.

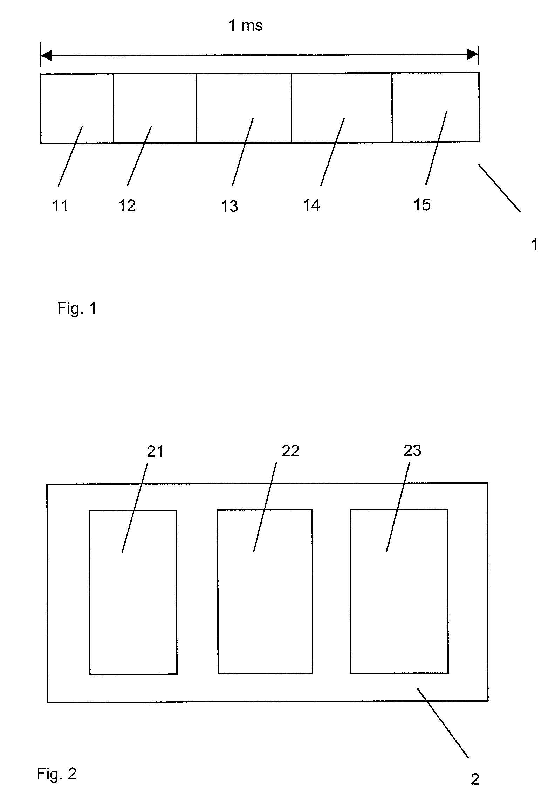

Fig. 1 shows an example of such a multi-mode modulation frame. It shows the multi-mode modulation frame 1 with five frame parts 11 to 15.

The frame part 11 is the preamble of the frame. The frame part 12 is a control field, which comprises control information for the physical and the medium access layer.

The following three frame parts 13, 14 and 15 comprise payload information which may be encoded by different modulation formats. For example, the frame part 13 comprises information in form of the QPSK modulation format, the frame part 14 comprises information in form of the 16QAM modulation format and the frame part 15 comprises information in the form of the 64QAM modulation format.

The frame structure, for example the length of different modulation parts can vary from frame to frame. The average and peak power of the different modulation formats of frame 1 is different. Inside the frame also a gap may occur.

The multi-mode modulation frame shown in the Fig. 1 has a length of 1 ms. But, the length of the multi-mode frame 1 and the number of different frame part can vary as well as the frame structure.

Fig. 2 shows a transceiver 2. The transceiver 2 comprises at least one receiver and at least one transmitter and may be formed by a line card of a LMDS system. The transceiver 2 comprises three parts 21 to 23. The part 21 comprises analog circuits, for example analog amplifiers. The part 22 comprises one or several ASICs (ASIC = Application Specific Integrated Circuit) providing a hardware realization of a digital logic. The part 23 comprises a microprocessor controlled by a software program.

All this different parts 21 to 23 of the transceiver 2 are working together to implement the receiver and transmitter of the transceiver 2.

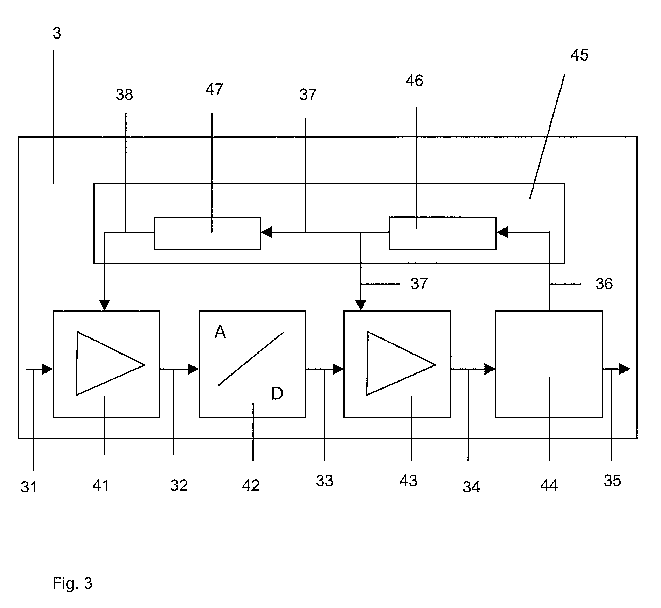

Fig. 3 shows a first embodiment of a receiver according to the invention.

Fig. 3 shows a receiver 3 which comprises a first amplifier stage 41, an analog to digital converter 42, a second amplifier stage 43, a decision device 44 and a gain control device 45.

The first amplifier stage 41 is an analog gain adjustment block which is variable in a high dynamic range. The amplifier stage 41 may be implemented by part 21 of Fig. 2.

But, it is also possible that the first amplifier stage 41 is a digital gain adjustment block which is variable in a high dynamic range. In this case, the analog to digital converter 42 is arranged to feed this digital gain adjustment block. The analog to digital converter has to be adapted to this specific digital gain adjustment block and has to output a digital wordwidth able to represent a high dynamic range.

The second amplifier stage 43 is a digital gain adjustment block which is working in a digital way and is able to vary the gain in a fast way. For example, the amplifier stage 43 is formed by a simple multiplier.

The decision device 44 performs digital symbol demapping and provides demodulated symbols 35 and gain control information 36.

Decision thresholds are used for de-map the symbols. These decision thresholds take into account the different modulation formats and therefore have to be synchronized to the current frame. The gain control information 36 indicates the quality of the demodulation decisions and may be calculated by considering the deviation of symbols from associated thresholds.

The gain control device 45 uses this gain control information as criterion for controlling the gains of the amplifier stages 41 and 43.

The amplifier stage 43, the decision device 44 and the gain control device 45 may be implemented by part 22 and/or part 23 of Fig. 2.

The overall demodulation chain consist of the amplifier stage 41 with gain G1 receiving an analog input signal 31, the analog to digital converter 42 converting the amplified input signal 32 to digital values, the amplifier stage 43 with gain G2 performing a digital amplification of a digital signal 33 and the decision device 44 receiving a digital signal 34 from the amplifier stage 43. The demodulation chain has to provide an appropriate overall gain G = G1 x G2, so that the signal power levels of the different modulation formats correspond to the thresholds of the decision device 44.

A power level deviation is detected by the decision device 44. The power level can be corrected digitally by adapting the gain G2 of the amplifier stage 43:

$$G2' = G2 \times \triangle G2.$$

The overall gain is now:

$$G'=G1 \times G2'=G1 \times G2 \times \triangle G2$$

The dynamic range of G2, $\Delta G2_{max}$ is usually small (e.g. +/- 3 dB), because a higher dynamic would require higher internal wordwidth, thus leading to a disadvantage and expensive hardware implementation. The required dynamic of the overall gain, however, is much higher (for example up to +/- 30 dB).

If the gain correction $\Delta G2$ exceeds its specific dynamic range, then this correction value is transferred by the gain control device 45 to the analog amplifier stage 41:

$$G1'=G1 \times \Delta G2.$$

The digital gain G2 then will be corrected to $G2'' = G2'/\Delta G2 = G2$, so that the whole dynamic range for the digital amplifier stage 43 is available again:

$$G'=G1 \times \Delta G2 \times G2 = G1' \times G2.$$

The overall gain then will remain the same, but the gain adjustment is now done completely by the analog amplifier stage 41.

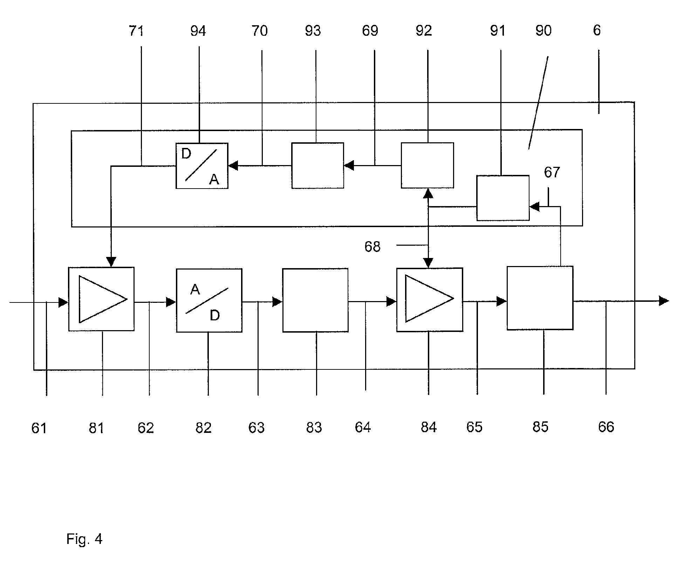

According to a further embodiment of this invention, it is possible that the gain control device 45 controls the decision thresholds of the decision device 44, in addition to or instead of controlling the amplifier stage 43. A proper adjustment of the decision thresholds has the same effect as adjusting the gain of the amplifier stage 43. Consequently, the decision thresholds can be adjusted dependant on the quality of the decisions as described for the digital amplifier stages according to Fig. 3 and 4.

Two gain control loops are combined to provide accurate power detection and fast gain adjustment together with high dynamic range. The gain control device 45 comprises two loop filters 46 and 47.

The first gain control loop is formed by the amplifier stage 43, the decision device 44 and the loop filter 46. The loop filter 46 may also be realized by a stepwise adaptation algorithm, like e. g. a LMS algorithm. This gain control loop is a digital gain control loop. The signals 34, 36 and 37 exchanged between the units of this digital gain control loop are digital signals.

The loop filter 47 and the amplifier stage 41 form a second gain control loop. This gain control loop is an analog gain control loop due to the analog amplification of the analog input signal 31 by the amplifier stage 41. The loop filter 47 can work in an analog or in a digital way. Even, the signal 38 which controls the gain of the amplifier stage 41 may be a digital or an analog signal.

Consequently, the gain adjustment is done by a digital gain control loop and an analog gain control loop. The digital gain control loop can follow power level deviations of multi-mode modulation signals very fast and accurate, but has only a dynamic range of about +/- 3dB. The gain correction of the digital loop is used to control the analog gain control loop. If the power level deviation exceeds the dynamic range of the digital loop, the analog loop adjusts its gain so that the gain setting of the digital loop changes back towards the nominal gain.

The analog gain control loop provides a dynamic range of 40 to 50 dB. It may be slower than the digital loop, as long as the power level deviation between two gain control steps of the analog gain control is less than the dynamic range of the digital control loop.

For a specific implementation and dimensioning, the loop filters 46 and 47 of the two loops and the time constants have to be designed carefully, taking into account the specific available dynamic ranges and the maximum possible slope and duration of the input signal power level.

Further embodiments of the present invention are now demonstrated by hand of Fig. 4.

Fig. 4 shows a receiver 6 which comprises two amplifier stages 81 and 84, an analog to digital converter 82, a demodulator 83, a decision device 85 and a gain control device 90.

The gain control device 90 comprises two loop filters 91 and 93, an digital to analog converter 94 and a control unit 92. The loop filter 91 may be realized by a stepwise adaptation algorithm, like e. g. a LMS algorithm.

An input signal 61 is received by the amplifier stage 81 and a de-mapped symbol output signal 66 is output by the decision device 85. Signals 62 to 65 represent signals exchanged within the demodulation chain. Signals 67 to 71 represent signals exchanged for gain control.

The amplifier stage 81 is an analog amplifier. It amplifies the analog input signal 61 with gain G1 under control of the analog control signal 71. The analog to digital converter 82 converts the analog output signal 62 of the amplifier stage 81 to digital words. In principle, all kinds of analog to digital converters can be used as analog to digital converter 82.

The digital output signal of the analog to digital converter 82 is processed by the demodulator 83. The demodulator 83 is formed by a digital logic which might be part of an ASIC. The demodulator 83 demodulates the carrier frequency and detects the symbol clock and the symbol phase of the signal 63.

But, it is also possible to implement the demodulator 83 in an analog way. According to this embodiment of the invention, the analog output signal of the amplifier stage 81 feeds the an analog demodulator which demodulates the carrier frequency and detects the symbol clock and the symbol phase of the signal 62. An analog to digital converter converts the analog output signal of this analog demodulator to digital words. The digital output signal of this analog to digital converter feeds the amplifier stage 84.

The digital output signal of the digital demodulator 83 is processed by the amplifier stage 84. The amplifier stage 84 is formed by a digital equalizer. This equalizer processes the digital signal 64 dependent on equalization coefficients set by the digital control signal 68. But, it is also possible that the amplifier stage 84 is a simple digital amplifier, for example a multiplier.

The decision device 85 processes the digital output signal 65 of the amplifier stage 84. It evaluates the headers of the multi-mode modulation frames for detecting the modulation formats assigned to different parts of the multi-mode modulation frames. For example, it detects the frame structure and the modulation mode assigned to the different parts 13 to 15 of the multi-mode modulation frame 1 by the evaluation of the header 11 of the multi-mode modulation frame 1. Then, it applies to each part of the multi-mode modulation frame an associated symbol demapping algorithm and/or symbol demapping data.

For example, it applies to part 13 a demapping algorithm for the modulation mode QPSK, to the part 14 a demapping algorithm for the modulation format 16QAM and to the part 15 a symbol demapping algorithm for the modulation mode 64QAM.

It is possible that the decision device 85 applies a respective predefined gain to different modulation formats of the multi-mode modulation frames. For example, it may apply to the parts 13 to 15 of the multi-mode modulation frame 1 different gains $G_A$, $G_B$ and $G_C$, respectively. Further, it is possible that the amplifier stage 84 or the decision device 85 applies a respective associated gain to different modulation formats of the multi-mode modulation frames, under control of the gain control device 90.

Further, the decision device 85 may perform further processing of the signal 65, for example, forward error correction.

Parallel to decoding, the decision device 85 generates a mean error signal indicating the quality of the demodulation decision and representing the mean symbol derivation of symbol demapping. Preferably, this mean error signal is a mean square error signal. But, it is also possible that all other forms of error signals are generated by decision device 85.

This error signal, which is the control signal 67, is used by the loop filter 91 as input value. The loop filter 91 is a digital loop filter which executes a first gain control loop algorithm. This algorithm takes the quality of the demodulation decision of the decision device 85 as input value and controls the gain of the amplifier stage 84 to force maximum quality of demodulation decisions. For example, the first gain control loop algorithm is a LMS algorithm which takes the mean error signal 67 as input value and controls the equalization coefficients of a second amplifier stage 84 to force the mean square error to a minimum value.

The loop filter 93 is a digital loop filter which executes a second gain control loop algorithm. The second gain control loop algorithm takes the gain of the amplifier stage 84 as input value and controls the gain of the amplifier stage 81 to force the gain of the amplifier stage 84 to a predefined range.

According to this embodiment, the digital signal 68 only contains information about the equalization coefficients which are applied to the amplifier stage 84. The control unit 92 calculates the gain G2 of the amplifier stage 84 based on these equalization coefficients. Further, it compares this calculated gain G2 with a predefined gain and calculates the difference between this predefined, ideal gain and the actual calculated gain of the amplifier stage 84. The result is a failure signal describing the derivation of the actual gain of the amplifier stage 84 from the optimum gain of this amplifier stage.

The predefined gain is for example set to a gain which enables the amplifier stage 84 to operate mainly in the middle of its amplification range.

The gain failure signal 69 is used as input signal of the loop filter 93. The loop filter 93 is, for example, a PID-controller which is adapted to the above described task of this gain control loop.

The digital to analog converter 94 is preferably a one bit digital to analog converter working based on pulse width modulation. It converts the digital control signal 70 to the analog control signal 71, which controls the gain of the analog amplifier stage 81.

## Claims

1. A receiver (3, 6) for a transmission system working with bursty signals (1, 31,61) that may be modulated in more than one mode, the receiver (3, 6) comprising a decision device (44, 85) for symbol demapping,
   **characterized in that**
   the receiver (3, 6) further comprising: a first amplifier stage (41, 81) situated near to the input of the receiver (3, 6), the gain of the first amplifier stage (41, 81) is variable in a high dynamic range; a second amplifier stage (43, 84) situated near to the decision device (44, 85), the gain is variable in a fast way; and a gain control device (45, 90) using the quality of the demodulation decisions (36, 67) detected by the decision device (44, 85) as criterion for controlling the gains of the second amplifier stage (43, 84) and the first amplifier stage (41, 81).

2. The receiver for a transmission system according to claim 1,
   **characterized in that**
   the first amplifier stage (41, 81) mainly working in an analog way and the second amplifier stage (43, 84) mainly working in a digital way.

3. The receiver for a transmission system according to claim 1,
   **characterized in that** the gain control device executing a first gain control loop algorithm (46, 91) taking the quality of the demodulation decision (36, 67) as input value and controlling the gain of the second amplifier (43, 84) to force maximum quality of demodulation decisions; and the gain control device (45, 90) executing a second gain control loop algorithm (47, 92, 93) taking the gain of the second amplifier stage as input value (37, 69) and controlling the gain of the first amplifier stage (41, 81) to force the gain of the second amplifier stage (43, 84) to a predefined range.

4.  The receiver for a transmission system according to claim 1,
    **characterized in that**
    the receiver (6) comprising a digital demodulator (83) for demodulating the carrier frequency and for determining the symbol clock and symbol phase.

5.  The receiver for a transmission system according to claim 3,
    **characterized in that**
    the decision device (44, 85) generating an error signal (36, 67) indicating the quality of the modulation decision and representing the mean symbol derivation of the mapping, the first gain control loop algorithm (91) is an adaptation algorithm taking the error signal (67) as input value and controlling equalization coefficients (68) of the second amplifier stage (84) to force the error to a minimum value.

6.  The receiver for a transmission system according to claim 3,
    **characterized in that**
    the gain control device (90) comprising a control unit (92) for calculating the gain of the second amplifier stage (84) based on equalization coefficients (68) of the second amplifier stage (84) and using this calculated gain as input value (69) of the second gain control algorithm (93).

7.  The receiver for a transmission system according to claim 1,
    **characterized in that**
    the decision device (44, 85) is a multi-mode decision device performing symbol demapping for different modulation formats (13, 14, 15), for example, for QPSK, 16QAM and 64QAM, combined in a multi-mode modulation frame (1).

8.  The receiver for a transmission system according to claim 7,
    **characterized in that**
    the decision device (44, 85) evaluating headers (11) of multi-mode modulation frames (1) for determining the modulation formats assigned to different parts (13, 14, 15) of the multi-mode modulation frames (1) and applying by help of the result of this evaluation an associated symbol demapping algorithm to the different modulation formats of the multi-mode modulation frames (1).

9.  The receiver for a transmission system according to claim 8,
    **characterized in that**
    the decision device (85) applying a respective associated predefined gain to the different modulation formats of the multi-mode modulation frames (1).

10. The receiver for a transmission system according to claim 8,
    **characterized in that**
    the second amplifier stage (84) applying a respective associated gain to different modulation formats of the multi-mode modulation frames (1), the associated mode dependent gains are controlled by the first gain control loop algorithm (91).

11. A transceiver (2) with a receiver (3, 6) according to claim 1.

12. A method for gain control of a receiver (3, 6) working with bursty signals (1) that may be modulated in more than one mode,
    **characterized in that**
    the method comprising the steps of:

    controlling a first amplifier stage (41, 81) situated near to a receiver input, the gain of this amplifier stage (41, 81) is variable in a high dynamic range;

    controlling a second amplifier stage (43, 84) situated near to a decision device (44, 85), the gain of this amplifier stage (43, 84) is variable in a fast way, or controlling the decision thresholds of a decision device, the thresholds are variable in a fast way;

    deriving from the quality of the decisions (36, 67) of the decision device (44, 85) a criterion for the necessary variation of the gains or the decision thresholds, respectively;

    deriving from said criterion a fast, but dynamically limited part and using this part (68) for controlling the gain of the second amplifier stage (84) or the decision threshold of the decision device (85), respectively; and

    deriving from said criterion a part (69) including the full dynamic range, but limited in speed, and using this part (69) for controlling a gain of the first amplifier stage (81).

1 ms

11    12    13    14    15

1

Fig. 1

21    22    23

2

Fig. 2

Fig. 3

Fig. 4

European Patent

Office

**EUROPEAN SEARCH REPORT**

Application Number

EP 02 36 0305

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 6 154 503 A (STROLLE CHRISTOPHER HUGH) 28 November 2000 (2000-11-28) | 1,12 | H04B1/10 H04L27/38 |
| Y | * column 3, line 42 - column 4, line 55; claim 1; figure 1 * <br> * abstract * <br>--- | 2-11 | |
| Y | US 5 671 253 A (STEWART JOHN SIDNEY) 23 September 1997 (1997-09-23) * column 3, line 50 - column 6, line 65; figure 5 * * abstract * <br>--- | 2-11 | |
| X | US 6 002 723 A (CHETHIK FRANK) 14 December 1999 (1999-12-14) | 12 | |
| Y | * the whole document * <br>--- | 2-11 | |
| A | US 6 072 998 A (KAKU TOMOYA) 6 June 2000 (2000-06-06) * abstract; claim 1; figure 1 * <br>--- | 1-12 | |
| A | US 5 999 559 A (TAKAKI TETSUYA) 7 December 1999 (1999-12-07) * abstract; claim 1; figures 3,6B * * column 3, line 50 - column 6, line 65 * <br>----- | 1-12 | TECHNICAL FIELDS SEARCHED (Int.Cl.7) <br><br>H04B H04L H03G |

The present search report has been drawn up for all claims

| Place of search | Date of completion of the search | Examiner |
|---|---|---|
| MUNICH | 2 April 2003 | Kolbe, W |

## ANNEX TO THE EUROPEAN SEARCH REPORT
## ON EUROPEAN PATENT APPLICATION NO.　　　EP 02 36 0305

This annex lists the patent family members relating to the patent documents cited in  the above-mentioned European search report.
The members are as contained in the European Patent Office EDP file on
The European Patent Office is in no way liable for these particulars which are merely  given for the purpose of information.

02-04-2003

| Patent document cited in search report | | Publication date | Patent family member(s) | | Publication date |
|---|---|---|---|---|---|
| US 6154503 | A | 28-11-2000 | JP | 10065750 A | 06-03-1998 |
| US 5671253 | A | 23-09-1997 | AU | 701379 B2 | 28-01-1999 |
| | | | AU | 6403496 A | 10-02-1997 |
| | | | BR | 9609629 A | 06-04-1999 |
| | | | CA | 2226503 A1 | 30-01-1997 |
| | | | CN | 1191050 A | 19-08-1998 |
| | | | EP | 0872096 A1 | 21-10-1998 |
| | | | JP | 11509063 T | 03-08-1999 |
| | | | PL | 324380 A1 | 25-05-1998 |
| | | | WO | 9703509 A1 | 30-01-1997 |
| US 6002723 | A | 14-12-1999 | NONE | | |
| US 6072998 | A | 06-06-2000 | JP | 10145250 A | 29-05-1998 |
| | | | AU | 730695 B2 | 15-03-2001 |
| | | | AU | 4509897 A | 14-05-1998 |
| | | | CA | 2220761 A1 | 12-05-1998 |
| US 5999559 | A | 07-12-1999 | JP | 3137181 B2 | 19-02-2001 |
| | | | JP | 11017566 A | 22-01-1999 |
| | | | AU | 736578 B2 | 02-08-2001 |
| | | | AU | 7314598 A | 24-12-1998 |
| | | | GB | 2326783 A ,B | 30-12-1998 |
| | | | KR | 273492 B1 | 15-12-2000 |

For more details about this annex : see Official Journal of the European Patent Office, No. 12/82